(19) Europäisches Patentamt
European Patent Office
Office européen des brevets

(11) Publication number: **0 189 465**
**B1**

(12) **EUROPEAN PATENT SPECIFICATION**

(45) Date of publication of patent specification: **11.11.87**

(51) Int. Cl.⁴: **B 27 K 3/50**

(21) Application number: **85903657.6**

(22) Date of filing: **03.07.85**

(86) International application number: **PCT/DK 85/00064**

(87) International publication number: **WO/8600560 (30.01.86 Gazette 86/03)**

# (54) A FUNGICIDAL COMPOSITION TO PRESERVE FRESHLY CUT WOOD AGAINST BLUE STAIN AND MOLD FUNGI ATTACKS.

(30) Priority: **04.07.84 DK 3272/84**

(43) Date of publication of application: **06.08.86 Bulletin 86/32**

(45) Publication of the grant of the patent: **11.11.87 Bulletin 87/46**

(84) Designated contracting states: **AT BE CH DE FR GB IT LI LU NL SE**

(56) References cited:
EP-A- 0 035 096
EP-A- 0 058 142
WO-A-82 /038 17
AT-C- 354 060
DE-A- 2 132 701
DE-A- 2 650 579
DE-A- 3 308 303
DE-C- 955 551
FR-A- 1 600 399
GB-A- 2 126 579
SE-B- 425 043
US-A- 1 921 324
US-A- 2 346 632
US-A- 2 347 635
US-A- 2 395 311
US-A- 2 763 579
US-A- 3 138 533
US-A- 3 519 476

(73) Proprietor: **GORI AS**
**Birkemosevej 1**
**DK-6000 Kolding (DK)**

(72) Inventor: **JENSEN, Bjorn, Ulrik**
**Daadyrvej 37**
**DK-6000 Kolding (DK)**
Inventor: **IMSGARD, Finn**
**Daadyrvej 25**
**DK-6000 Kolding (DK)**

(74) Representative: **Dost, Wolfgang, Dr. rer. nat. Dipl.-Chem. et al**
**Patent- u. Rechtsanwälte Bardehle, Pagenberg, Dost, Altenburg Frohwitter & Partner Galileiplatz 1**
**D-8000 München 80 (DE)**

**EP 0 189 465 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

**Description**

The present invention concerns a fungicidal composition to preserve freshly cut wood and wood products against blue stain and mold fungi attacks.

For many years pentachlorophenol and other chlorinated phenols have been the predominant agents for preservation of cellulosic materials because of their extremely broadspectral microbiocidal effect. Chlorinated phenols have been used e. g. for combatting blue stain and mold fungi, which in particular cause discoloration of freshly cut wood. In recent years, however, it has been found that technical grade chlorinated phenols may contain traces of dioxines which are known to have teratogenic activity, just as dioxines may presumably be formed by combustion of wood which has been impregnated with chlorinated phenols.

In view of this, the use of chlorinated phenols has been prohibited in a number of countries, including Sweden, and accordingly there is an urgent need for fungicides which are not vitiated by undesirable side effects on humans and animals and which are effective against blue stain and mold fungi.

Another urgent problem is to minimize the costs and any handling and toxicity risks of wood preserving agents.

The object of the present invention is to provide a fungicide of the above-mentioned type which is effective and which does not present any problems as regards human toxicity and handling.

The invention is based on the surprising finding that a mixture of two known groups of fungicidal compounds, viz.

a) urea and

b) monoquaternary ammonium compounds of the type stated in the characterizing portion of claim 1 and with the restrictions states in claim 1

exhibits a synergistic fungicidal effect against blue stain and mold fungi which as demonstrated below, exceeds the additive effect of the individual components significantly.

The use of urea in various wood preserving composition is generally known. Thus, the DE Patent Specification 955,551 mentions the use of urea to facilitate mouldability of mould bodies containing fungicidal wod preserving agents.

The US Patent Specification 1,921,324 mention urea as an inflammability decreasing component of wood preserving agents on the basis of nitrophenols.

The US Patent Specification 2,347,635 concerns a synergistic mixture of urea and chlorophenols. It is stressed that through urea is considered to have fungistatic activity on fungi attacking fresh wood, urea is a suitable substrate for other microorganisms, so the use of urea may result in more serious discolorations than those caused by the mentioned fungi. This drawback is remedied, according to the patent specification, by adding chlorophenols.

A. Yde-Andersen, Det forstlige Forsøgsvæsen (the Danish forest research department) vol. XXXVIII, fascicle 3, p. 209-17, mentions urea as an agent against attacks from the heart-rot fungus Fomes annosus (a basidiomycete), which grows only on living wood and spreads from stump faces after cutting to adjacent trees through the roots. The effect seems to be conditional upon the ability of urea to promote the growth of wood-destroying fungi, so that the stumps disintegrate faster and so that the growth of Fomes annosus is impeded.

As demonstrated below, however, urea has a very limited effect on blue stain and mold fungi.

The DE Auslegeschrift 2,132,701 describes the use of quaternary ammonium compounds of the present type in mixture with a predominant amount (70 to 93 % by weight) of thiourea to combat discolouring fungi of the blue stain type. It appears from the specification that the quaternary ammonium compounds are active only in so high concentrations as 4 to 5 % by weight in aqueous solution. However, as opposed to previous assumptions (the DE Offenlegungsschrift 1,567,097), the use of thiourea is very inadvisable from an environmental point of view. Thus, the substance is toxic on aspiration, on touch of the skin and on consumption, just as it may cause allergy. Moreover, the substance is suspected of being carcinogenic, and e. g. in Norway this has caused it to be classified as a cancerogenic substance (Statens Forurensningstilsyn (the Norwegian pollution inspectorate), February 1983).

The DK Patent Specification 144,695 (cf. the GB Patent Specification 1,467,420) describes the use of quaternary ammonium compounds of the present type in an aqueous system containing fungicidally active triorganotin compounds to preserve wood which has not been substantially infected by wood-destroying fungi.

A similar agent on the basis of an alkali metal salt of a biocidally active organic carboxylic acid and one or more quaternary ammonium salts of the present type is described in the DE Offenlegungsschrift 3,308,303, cf. the FI Published Application 63,513. However, as demonstrated below, commercially available agents of this type provide poorer preservation of pine boards that the agents of the invention.

A fungicidal agent, in particular for preservation of wood, is described in the SE Published Application 425,043. In addition to a quaternary ammonium compound the agent contains at least one guanidated aliphatic diamine, such as the mixed product guazatin triacetate, and/or polyamine. However,

as demonstrated below, commercially available agents of this type provide a poorer preservation, in particular of pine boards but also of spruce boards, than the agents of the invention.

Quaternary ammonium compounds of the present type are moreover mentioned briefly in « What's new in forest research », Forest Research Institute, Rotorua, New Zealand, October 77. It is concluded that these compounds have great potential as wood preservatives, but it is also emphasized that they are less useful in the treatment of freshly sawn wood. Also the effect of these compounds on blue stain and mold fungi is shown in the following test report.

The US Patent Specification 2,346,632 describes the use of e. g. urea as a consistency-imparting agent in disinfecting agents on the basis of quaternary ammonium compounds. It is said directly that the substance is indifferent and does not impair the disinfecting power.

Finally, the US Patent Specification 3,138,533 describes the use of a mixture of urea and quaternary ammonium compounds as a bacteriostatic and germicidal agent. The specification demonstrates a synergistic effect against the bacteria Proteus vulgaris and Streptococcus pyogenes, and it also reports an inhibiting effect on microorganisms (dermatophytes) which cause « Athlete's Foot ». Apart from the fact that these dermatological fungi are not related to blue stain and mold fungi, it appears clearly from the specification that urea is used partly as an « auxiliary » for the disinfecting ammonium compound, in particular as a solubility promoting agent, and partly for skin care purposes.

Conclusively, it may be said that though the quaternary ammonium compounds of the present type are very familiar in wood preserving agents also against blue stain and mold fungi, then there is no incitement to test mixtures with urea, in particular not when the observed very low effect of urea itself is taken into consideration. Especially, it could not be predicted that it would be possible to reduce the amount of quaternary ammonium compounds drastically to below 1 % and that the mixture would be more effective than commercial synergistic mixtures containing quaternary ammonium compounds.

As mentioned, the quaternary ammonium compounds useful in the agent of the invention are defined in the characterizing portion of claim 1.

Preferred compounds within this framework are defined in claims 2, 3 and 4.

The weight proportion between urea (a) and the quaternary ammonium compound (b) can vary within the limits stated in claim 1.

The concentration of the constituent components depends in particular upon the microorganisms to be combatted. The values listed in the following test reports give an indication of the useful amounts in sawmill products considering that the liquid amount usually absorbed is 15 to 20 $l/m^3$ of wood.

The fungicidal effect of the present composition and their individual components have been tested according to the standard « Mycological testing of anti-stain preservatives for freshly sawn timber. The mini-board method » NWPC Standard 1.4.1.3/79.

The samples used are freshly sawn mini-boards with the dimensions 10 × 50 × 300 mm. One half of the board is submerged for 20 sec. in the test solution (emulsion/suspension). Then the boards are sprayed with mixed spore suspensions of selected blue stain and mold fungi and after 21 days of storage in incubation boxes at room temperature the extent of fungi attacks is rated according to the following scale :

0 no fungus growth
1 traces of fungus growth
2 low fungus growth
3 moderate fungus growth
4 strong to maximum growth (all surfaces covered)

Usually, 5 boards are used for each test solution, and a given concentration of the test compound is considered effective if the average for the treated ends is below 1.0.

The comparative compound used is sodium pentachlorophenolate and the test organisms are

Blue stain :

Aureobasidium pullulans
Ceratocystis pilifera
Sclerophoma entoxylina

Mold fungi :

Aspergillus amstelodami
Cladosporium sphaerospermum
Penicillum spp

Two test series were conducted, and the results are listed in the table below, with the following abbreviations :

DDB : didecyldimethyl ammonium bromide
DDC : didecyldimethyl ammonium chloride
TTC : trimethylcoco ammonium chloride
NaPCP : sodium pentachlorophenolate

Test series

| Substrate/ recipe | Conc. weight-% | Blue Stain Treated | Blue Stain Untreated | Mold Treated | Mold Untreated |
|---|---|---|---|---|---|
| Component a) Urea | 0.5 | 4.0 | 4.0 | 3.4 | 3.6 |
| | 1.0 | 4.0 | 4.0 | 3.6 | 3.6 |
| | 2.0 | 3.2 | 3.6 | 2.6 | 3.0 |
| | 5.0 | 1.6 | 3.4 | 2.0 | 3.4 |
| | 10.0 | 1.4 | 3.4 | 1.4 | 3.2 |
| Component b) DDB | 0.25 | 1.2 | 3.2 | 2.0 | 3.6 |
| | 0.5 | 1.8 | 3.8 | 1.4 | 3.0 |
| | 1.0 | 1.6 | 3.8 | 1.2 | 3.0 |
| | 2.0 | 1.0 | 3.4 | 0.7 | 2.6 |
| | 4.0 | 0.6 | 3.6 | 0.4 | 3.2 |
| DDC | 0.25 | 2.2 | 3.8 | 2.2 | 3.6 |
| | 0.5 | 2.6 | 3.4 | 1.2 | 3.2 |
| | 1.0 | 1.8 | 4.0 | 0.8 | 3.2 |
| | 2.0 | 1.0 | 3.2 | 0.8 | 2.8 |
| | 4.0 | 0.4 | 3.0 | 0.8 | 3.0 |
| TCC | 0.25 | 2.2 | 2.8 | 1.2 | 3.2 |
| | 0.5 | 1.4 | 3.6 | 2.0 | 3.4 |
| | 1.0 | 2.1 | 4.0 | 1.7 | 4.0 |
| | 2.0 | 1.3 | 3.4 | 1.1 | 3.8 |
| | 4.0 | 1.2 | 3.4 | 1.0 | 2.8 |
| Mixture b) +a) DDB + urea | 0.25+ 5 | 0.2 | 4.0 | 0.2 | 3.8 |
| | 0.25+10 | 0.2 | 3.2 | 0 | 4.0 |
| | 0.5 + 5 | 0.4 | 3.6 | 0.8 | 3.6 |
| | 0.5 +10 | 0 | 3.2 | 0.4 | 4.0 |
| | 1.0 + 5 | 0 | 3.0 | 0.2 | 4.0 |
| | 1.0 +10 | 0 | 3.6 | 0 | 3.6 |
| DDC + urea | 0.25+10 | 0.2 | 4.0 | 0 | 3.4 |
| | 0.5 +10 | 0.2 | 3.8 | 0 | 3.4 |
| | 1.0 +10 | 0 | 4.0 | 0 | 4.0 |
| TCC + urea | 0.25+10 | 0 | 4.0 | 0.4 | 3.4 |
| | 0.5 +10 | 0.2 | 2.6 | 0.2 | 3.2 |
| | 1.0 +10 | 0 | 3.0 | 0 | 3.4 |
| NaPCP (control) | 0.5 | 1.3 | 3.3 | 0 | 2.3 |
| | 1.0 | 1.3 | 4.0 | 0 | 3.3 |
| | 2.0 | 0.3 | 3.7 | 0 | 3.7 |

The above tests lead to the following conclusions:

Urea has a moderate effect when the concentration is 5 % or more.

The quaternary ammonium compounds have a good effect in the concentration range of 2 to 4 % by weight.

The subject mixtures of the components in which the quaternary ammonium compounds are used in concentrations considerably below the range of 2 to 4 % by weight have an extremely effective preservation in accordance with the standard employed. This effect exceeds the additive effect of the

compounds significantly and represents a surprising synergy.

Practice test report

To test the present wood preserving compositions in practice a plurality of tests have been performed respectively by the applicant, at two Danish sawmills and at Trælaboratoriet under Statens Tekniske Forskningscentral (the wood laboratory under the state institute for technical research) in Finland.

The selected comparative compounds are partly the known agent sodium pentachlorophenolate (NaPCP) and partly a plurality of commercially available products comprised by the patent literature mentioned in the preamble to this specification.

The tests are set out in the reports below, to which the following comments may be made, it being noted in general that pine is more susceptible to attacks than spruce.

Practice test 1

It will be seen from the tests with pine and spruce stacked with intermediate sticks that the present compositions 1 and 2 are better than or as good as the agents 3 and 4 of the prior art.

The improvement is even more distinct in case of pine and particularly spruce packed/stacked without intermediate sticks.

Practice test 2

It will be seen from the tests with spruce stacked without intermediate sticks that the present composition is significantly more effective than the known one.

Practice test 3

This test, which was conducted under very drastic (moist) conditions in Finland, shows that the present composition is greatly superior to the known one.

Practice test 4

This test illustrates the effectiveness of the composition.

(See Tables pages 6 to 8)

Results of practice test 1

Wood : Pine and spruce (25 × 100 × 1 000 mm)
Number of samples per test : 15
Start : 03.03.84
Location : GORI, Kolding, Denmark

| Recipe | Stack with intermediate sticks | | | | | Stack without intermediate sticks/packed stack | | | | | | | |
|---|---|---|---|---|---|---|---|---|---|---|---|---|---|
| | Pine | | | Spruce | | Pine | | | | Spruce | | | |
| | 12.6. | 14.8. | 29.10. | 14.8. | 29.10. | 3.5. | 12.6. | 14.8. | 29.10. | 3.5. | 12.6. | 14.8. | 29.10. |
| 1. 0.25% DDB+5% Urea | 0.1 | 0.3 | 1.7 | 0.1 | 0.7 | 0 | 1.5 | 1.7 | 2.5 | 0 | 0.4 | 0.3 | 1.2 |
| 2. 0.5 % DDB+5% Urea | 0 | 0 | 1.5 | 0.1 | 0.6 | 0 | 0.7 | 1.3 | 2.0 | 0 | 0.1 | 0.2 | 0.6 |
| 3. 0.25% DDE+1% Na-2-E a) | 0 | 0 | 2.8 | 0.1 | 0.9 | 0 | 1.1 | 1.5 | 3.0 | 0 | 1.0 | 2.0 | 2.8 |
| 4. 3.5 % Mitrol 48 b) | 0.1 | 0 | 1.4 | 0.1 | 0.5 | 0 | 0.4 | 1.1 | 2.7 | 0 | 0 | 0.8 | 1.5 |
| 5. 2% Na-PCP | 0 | 0 | 0.7 | 0 | 0.3 | 0 | 0 | 0.7 | 1.7 | 0 | 0.3 | 0.5 | 0.7 |
| 6. Untreated | 0.9 | 1.6 | 2.4 | 0.8 | 1.3 | 2.4 | 3.7 | 4.0 | 4.0 | 1.6 | 3.3 | 4.0 | 4.0 |

[a] Mixture according to the DE Offenlegungsschrift 33 08 303 (Na-2-E = sodiumethyl hexanoate)
[b] Mixture of 400 g/l (corresp. to 1.4 %) benzalconium chloride and 80 g/l (corresp. to 0.3 %) guazatin triacetate (SE Published Application 425, 043)

Results of practice test 2

Wood : 3 × 3" × 1.8 — 2.40 m spruce
Number of samples per test : 28
Start : 15.05.84
Location : Hovborg Sawmill, Denmark

| Recipe | Stack with intermediate sticks | | | Stack without intermediate sticks | | |
|---|---|---|---|---|---|---|
| | 26.06 | 13.08. | 09.10. | 26.06. | 13.08. | 09.10 |
| 1. 0.25% DDB+5% Urea | 0.3 | 0.9 | 1.0 | 0.04 | 0.8 | 1.1 |
| 2. 0.25% DDB+1.0% Na-2-E a) | 0.04 | 0.5 | 0.8 | 0.2 | 1.9 | 2.9 |
| 3. 2% Na-PCP | 0 | 0.2 | 0.6 | 0.1 | 0.3 | 0.5 |
| 4. Untreated | 2.0 | 1.8 | 2.4 | 3.2 | 3.8 | 3.9 |

a) Mixture according to the DE Offenlegungsschrift 33 08 303

Results of practice test 3

Wood : Pine (25 × 100 × 1 000 mm)
Start : 13.06.84
Location : VII, Finland

| Recipe | Fresh boards | | | | | | Without intermediate sticks/ dried boards n = 50 | |
|---|---|---|---|---|---|---|---|---|
| | 23.08.84 | | | 17.10.84 | | | | |
| | Without intermediate sticks | With intermediate sticks | $\bar{X}$ | Without intermediate sticks | With intermediate sticks | $\bar{X}$ | | |
| | n = 30 | n = 20 | n = 50 | n = 30 | n = 20 | n = 50 | 23.08. | 17.10. |
| 1. 0.5% DDB + 10% Urea | 0.1 | 0.1 | 0.1 | 0.2 | 0.5 | 0.3 | 0.1 | 0.3 |
| 2. 2% PCP | 0.5 | 0.1 | 0.3 | 0.9 | 0.2 | 0.6 | 0.5 | 1.8 |
| 3. 5% Sinestro c) | 0.3 | 0 | 0.2 | 1.6 | 0.8 | 1.2 | 0.2 | 1.5 |
| 4. Untreated | 4.0 | 1.0 | 2.8 | 4.0 | 3.0 | 3.6 | 3.5 | 3.6 |

c) Mixture of 33.5 % Na-2-E and 18.3 % TCC (i. e. 0.9 % TCC), cf. DE-A-33 08 303

Results of practice test 4

Wood : Spruce (75 × 75 × 2 400 mm)
Number of samples per test : 140
Start : 12.10.84
Location : Fuglsang Sawmill, Denmark

| Recipe | Without intermediate sticks | | | With intermediate sticks | | |
|---|---|---|---|---|---|---|
| | 13.11. | 10.12. | 11.03. | 13.11. | 10.12. | 11.03. |
| 1. 0.5% DDB + 5% Urea | 0.4 | 0.9 | 0.7 | 0.1 | 0.4 | 0.4 |
| 2. Untreated | 2.7 | 3.1 | 3.3 | 2.2 | 2.7 | 2.8 |

## Claims

1. A fungicidal composition to preserve freshly cut wood against blue stain and mold fungi attacks, comprising an aqueous solution, emulsion or suspension of

a) 5 to 10 % by weight of urea and

b) 0.25 to 1.0 % by weight of one or more monoquaternary ammonium compounds of the general formula

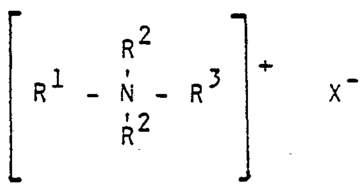

wherein $R^1$, $R^2$, $R^3$ and $R^4$ are the same or different and each is a straight or branched saturated or unsaturated alkyl group of 1 to 20 carbon atoms, alkylaryl group of 7 to 19 carbon atoms, aralkyl group of 2 to 27 carbon atoms or aryl group of 6 to 20 carbon atoms or alkylene oxide condensates of such groups, two or three of the substituents in combination with the quaternary nitrogen atoms and optionally additional hetero atoms being capable of forming a saturated or unsaturated 5-, 6- or 7-membered heterocyclic ring, and X is a water-solubilizing anion, the weight proportion between components a) and b) being between 5 : 1 and 40 : 1, preferably about 10 : 1.

2. A composition according to claim 1, characterized in that $R^1$ is a $C_8$-$C_{20}$ alkyl group or benzyl group optionally substituted with a $C_1$-$C_{20}$ alkyl group, and $R^2$ and $R^3$, which may be the same or different, are each a $C_1$-$C_6$ alkyl group, $R^4$ is a $C_1$-$C_{20}$ alkyl group and X is bromide or chloride.

3. A composition according to claim 2, characterized in that $R^1$ is a benzyl group or a $C_8$-$C_{16}$, preferably $C_{10}$-$C_{16}$, alkyl group, $R^2$ and $R^3$ are each a methyl group and $R^4$ is a $C_8$-$C_{16}$, preferably $C_{10}$-$C_{16}$, alkyl group or a methyl group, and X is bromide or chloride.

4. A composition according to claim 3, characterized in that component b) is didecyldimethyl ammonium chloride or didecyldimethyl ammonium bromide, triethylcoco ammonium chloride or a benzalconium chloride.

## Patentansprüche

1. Fungizides Mittel zum Schutz von frisch geschnittenem Holz gegen Holzbläue und Pilzbefall, enthaltend eine wässrige Lösung, Emulsion oder Suspension aus

a) 5 bis 10 Gew.-% Harnstoff und

b) 0,25 bis 1,0 Gew.-% einer oder mehrerer monoquaternärer Ammoniumverbindungen der allgemeinen Formel

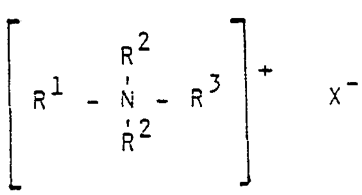

wobei $R^1$, $R^2$, $R^3$ und $R^4$ gleich oder verschieden sind und jeweils einen geradkettigen oder verzweigten, gesättigten oder ungesättigten Alkylrest mit 1 bis 20 Kohlenstoffatomen, Alkarylrest mit 7 bis 19 Kohlenstoffatomen, Aralkylrest mit 2 bis 27 Kohlenstoffatomen oder Arylrest mit 6 bis 20 Kohlenstoffatomen, oder Alkylenoxidkondensate solcher Reste bedeuten, zwei oder drei der Substituenten in Kombination mit den quaternären Stickstoffatomen und gegebenenfalls zusätzlichen Heteroatomen einen gesättigten oder ungesättigten 5-, 6- oder 7-gliedrigen heterocyclischen Ring zu bilden vermögen, und X ein wasserlöslich machendes Anion bedeutet, wobei das Gewichtsverhältnis zwischen den Komponenten a) und b) zwischen 5 : 1 und 40 : 1 liegt und vorzugsweise etwa 10 : 1 beträgt.

2. Mittel nach Anspruch 1, dadurch gekennzeichnet, daß $R^1$ ein $C_8$-$C_{20}$-Alkylrest oder Benzylrest, gegebenenfalls substituiert mit einer $C_1$-$C_2$-Alkylgruppe ist, $R^2$ und $R^3$ gleich oder verschieden sind und jeweils einen $C_1$ bis $C_6$-Alkylrest bedeuten, $R^4$ ein $C_1$ bis $C_{20}$-Alkylrest ist und X Bromid oder Chlorid bedeutet.

3. Mittel nach Anspruch 2, dadurch gekennzeichnet, daß $R^1$ eine Benzylgruppe oder ein $C_8$ bis $C_{16}$-, vorzugsweise $C_{10}$ bis $C_{16}$-Alkylrest ist, $R^2$ und $R^3$ jeweils eine Methylgruppe bedeuten, $R^4$ ein $C_8$ bis $C_{16}$-, vorzugsweise$C_{10}$ bis $C_{16}$-Alkylrest oder eine Methylgruppe ist, und X Bromid oder Chlorid bedeutet.

4. Mittel nach Anspruch 3, dadurch gekennzeichnet, daß die Komponente b) Didecyldimethylammoniumchlorid oder Didecyldimethylammoniumbromid, Triethylcocoammoniumchlorid oder ein Benzalconiumchlorid ist.

## Revendications

1. Composition fongicide, pour protéger le bois fraîchement coupé contre les attaques par la pourriture bleue et les moisissures, comprenant une solution, une émulsion ou une suspension aqueuse

a) de 5 à 10 % en poids d'urée, et

b) de 0,25 à 1,0 % en poids d'un ou plusieurs composés d'ammonium monoquaternaire de formule générale

$$\left[ R^1 - \overset{R^2}{\underset{R^2}{N}} - R^3 \right]^+ \quad X^-$$

dans laquelle $R^1$, $R^2$, $R^3$ et $R^4$ sont identiques ou différents, et chacun d'eux est un groupe alkyle saturé ou insaturé, à chaîne droite ou ramifiée, ayant de 1 à 20 atomes de carbone, un groupe alkylaryle ayant de 7 à 19 atomes de carbone, un groupe aralkyle ayant de 7 à 27 atomes de carbone ou un groupe aryle ayant de 6 à 20 atomes de carbone, ou des produits de condensation de ces groupes avec un oxyde d'alkylène, deux ou trois des substituants, en combinaison avec les atomes d'azote quaternaire et d'éventuels hétéroatomes supplémentaires, étant à même de former un noyau hétérocyclique saturé ou insaturé à 5, 6 ou 7 chaînons, et X est un anion solubilisateur dans l'eau, le rapport pondéral entre les constituants a) et b) étant compris entre 5 : 1 et 40 : 1 et étant de préférence d'environ 10 : 1.

2. Composition selon la revendication 1, caractérisée en ce que $R^1$ est un groupe alkyle en $C_8$-$C_{20}$ ou un groupe benzyle non-substitué ou substitué par un groupe alkyle en $C_1$-$C_{20}$, et $R^2$ et $R^3$, qui peuvent être identiques ou différents, sont chacun un groupe alkyle en $C_1$-$C_6$, $R^4$ est un groupe alkyle en $C_1$-$C_{20}$ et X représente un bromure ou un chlorure.

3. Composition selon la revendication 2, caractérisée en ce que $R^1$ est un groupe benzyle ou un groupe alkyle en $C_8$-$C_{16}$, de préférence en $C_{10}$-$C_{16}$, $R^2$ et $R^3$ sont chacun un groupe méthyle, et $R^4$ est un groupe alkyle en $C_8$-$C_{16}$, de préférence en $C_{10}$-$C_{16}$, ou un groupe méthyle, et X est un bromure ou un chlorure.

4. Composition selon la revendication 3, caractérisée en ce que le constituant b) est le chlorure de didécyldiméthylammonium ou le bromure de didécyldiméthylammonium, le chlorure de triéthyl (huile de coprah)-ammonium ou un chlorure de benzalkonium.